# EUROPEAN PATENT APPLICATION

(11) **EP 1 227 419 A1**
(43) Date of publication of application: **31.07.2002**
(21) Application number: 01101961.9
(22) Date of filing: 29.01.2001
(51) Int. Cl.: G06F 17/60

(54) **Simulating intelligent communication reactions**

(71) Applicant: Vista, New Media GmbH, 50670 Köln (DE)
(72) Inventor: Fuzinski, Alexandra, 50670 Köln (DE); Meyer, Christian, 50670 Köln (DE)
(74) Representative: Dendorfer, Claus, Dr.

(57) **Abstract**

A tree-like data structure (22) is adapted for use by an automatic system for simulating intelligent communication reactions (36) of the system in response to user inputs (34), and comprises a plurality of nodes (24x), at least one of the nodes (24x) being associated with trigger data that specifies at least one user input (34) that may lead to triggering the node (24x), at least one of the nodes (24x) being associated with reaction data that specifies at least one system reaction (36), wherein the arrangement of the nodes (24x) in the tree-like data structure (22) reflects the different communication contexts for which the nodes (24x) are intended, the communication context of a child node (24B, 24C) being a specialization of the communication context of its parent node (24A). A method uses this data structure for simulating intelligent communication reactions of the automatic system in response to user inputs (34). A computer program product and an apparatus comprise corresponding features.

## Description

The present invention concerns the field of user interfaces in computer systems and in particular the field of simulating semi-intelligent behavior for facilitating human interaction with computers. A preferred use of the present invention is in e-commerce applications where a human user interacts with a virtual person generated by the computer system.

The simulation of intelligent communication reactions is a long-standing object in the field of artificial intelligence. One of the early examples is the program ELIZA as described in the article "ELIZA - A computer program for the study of natural language communication between man and machine" by Joseph Weizenbaum, published in Communications of the Association for Computing Machinery, 9 (1965), pages 36-45.

The wide-spread use of powerful personal computers and of global computer networks created new fields of application for such semi-intelligent programs. Virtual agents or "bots" are now increasingly used for providing user assistance and support. This especially concerns applications that require an accessible and convincing presentation of products and information. Such applications include, for example, CD-ROM or online directories, service manuals, product guides, catalogs and shopping systems. The quality of the user interface is especially important in the field of electronic commerce such that new users (and potential customers) will be attracted and not deterred.

Implementing a virtual agent by means of a custom-programmed piece of software entails huge development costs. This may be acceptable for a few major projects, but it would be prohibitive for the majority of the applications mentioned above. Therefore a need exists for providing a platform and support tools that facilitate the development and maintenance of the functions and knowledge base of a virtual agent.

A commercial product that provides virtual agents for Internet applications is currently marketed by the present applicant under the trademark "VirtualFriends". Further information about this product can be found at the Internet address www.virtualfriends.de and in European patent application 00 110 842.2 filed on 22 May 2000. However, there is still room for improvement of the present VirtualFriends product. This concerns both the quality of the simulation of human-like behavior and the ease of configuring and customizing the communication rules of the virtual agent.

It is therefore an object of the present invention to provide techniques and tools used in connection with simulating semi-intelligent behavior that on the one hand allow an expressive and convincing simulation and on the other hand provide support in the development and maintenance of the simulation system. It is particular object of preferred embodiments of the present invention that the process of configuring a virtual agent system for a particular application and communication behavior should be as easy as possible and should preferably not require programming expertise.

These objects are solved fully or partially by a tree-like data structure having the features of claim 1, methods having the features of claims 7, 11 and 13, respectively, a computer program product having the features of claim 14 and an apparatus having the features of claim 15. The dependent claims concern preferred embodiments of the invention. The scope of protection of the present method claims is not intended to be restricted to the particular order of recitation of the method steps. Instead, the method steps may be performed in another order or in a parallel or semi-parallel (interleaved) fashion in some embodiments of the present invention.

The invention is based on the idea to use a tree-like data structure that combines or at least references, in an ordered and meaningful way, all pieces of information that are needed for the simulation of human-like behavior. This information includes trigger data that specifies which user inputs may lead to triggering of a particular node, and reaction data that specifies the reactions performed upon triggering of the node.

A meaningful communication between the human user and the automatic system requires that some knowledge is preserved about the communication events that have taken place so far. This knowledge is termed the "communication context" in the present document. A particular feature of the invention is that the arrangement of the nodes in the data structure reflects the different communication contexts for which the nodes are intended. Generally, nodes close to the root correspond to an unspecific or general context. The more specialized contexts (e.g., contexts that may result from less specialized contexts by further user inputs and/or system reactions) correspond to nodes located in deeper levels of the tree.

Because of the use of communication contexts, the system of the present invention may be configured for simulating human-like intelligence to an astonishing degree. Nevertheless no special programming skills are needed. The inventive suggestion to use a tree-like data structure has substantial advantages both with respect to automatic processing of the data structure and with respect to configuration and maintenance by a human designer. Furthermore, display programs and editors for the inventive data structure may use display and editing paradigms known to the general user from directory listings in graphical user interfaces. General computer users without any programming experience can use such programs intuitively and efficiently.

The tree-like data structure of the present invention may be implemented in a variety of ways including pointer structures, tables, files, and so on. The nodes may include the trigger and/or reaction data elements or references thereto. Important with respect to the present invention is not the actual implementation of the data structure, but rather its logical organization. This is especially apparent with respect to the displaying method of the present invention that may be used to show any internal data structure in the tree-like representation of the present invention.

In preferred embodiments of the invention, the degree of specialization of the communication context increases with increasing depth of the node within a branch of the tree. Nodes that have the same parent preferably are intended for use in the same context.

A way of organizing such nodes in some embodiments of the invention is the formation of node structures having one group node and a plurality of sub-nodes. The group node preferably contains only trigger data and is triggered in response to an "appropriate" user input. The sub-nodes are children of the group node and preferably contain only reaction data, each sub-node corresponding to a different possible reaction pattern in the same context. In some embodiments, one of several options may be selected regarding the order in which the sub-nodes are chosen in response to triggering the corresponding group node.

In preferred embodiments of the invention further special node types and/or node attributes are provided. Examples are nodes that are intended for execution when no user input is received within a predefined time interval (timeout or "IDLE" nodes) and nodes that are intended for execution in response to a user input for which no matching trigger data is found in the applicable communication context or contexts (wildcard or "DONT_KNOW" nodes).

The trigger data may, in various embodiments of the invention, be any data that specifies a set of user inputs which may cause the corresponding node to be executed. In some embodiments the trigger data may contain enabling and preventing keywords or clauses or sentence fragments, and a user input is considered to match the trigger data if the user input contains at least one of the enabling elements and none of the preventing elements. A user input may match the trigger data of a plurality of nodes. In this case, the system preferably selects the node to be executed according to predetermined rules.

In preferred embodiments of the invention, the reaction data may include various commands for providing some visible or audible reaction of the system. This includes commands to print or speak text and commands that cause some animation sequence of a virtual character to be displayed to the user. Text-to-speech and/or speech-to-text engines may be used for the input and/or output operations in some embodiments.

The simulation method of the present invention uses the inventive, tree-like data structure. In a given communication context, the user input is analyzed and a node associated with matching trigger data is found. As mentioned above, there may generally be several matching nodes, and further conditions and selection rules are preferably applied for determining which node will actually be triggered or executed. If the selected node is associated with reaction data, one or several or all of the defined system reactions will be performed. These steps are preferably performed repeatedly such that an ongoing sequence of user inputs and system reactions ensues.

The step of finding a node with matching trigger data preferably starts by searching only within the present communication context. The search is only extended to a less specialized context (i.e., a tree level closer to the root) if the search in the more specialized context did not yield a suitable node. This "backtracking" of the search process preferably covers a single more general tree level at each time. Several variant node types and attributes are preferably provided to influence the search process. This may include a context specific node type. Nodes of this type are only considered in the search of the original communication context, and are ignored after the first backtracking has taken place. A further possible node attribute is the "BLOCK" attribute which signifies that no backtracking beyond this node is allowed.

After a node has been selected in the search process, the new communication context may, in most embodiments, be set to that of the selected node. However, it is preferred to provide a node attribute signifying that the previous communication context is to remain unchanged. This possibility is useful for nodes that contain generic information (e.g., answers to general help questions). In some embodiments, there may further be the exception that the communication context is only changed once during the execution of a group node and an associated sub-node.

Preferred embodiments of the display method of the present invention employ features that are known to the user from other graphical tree-based browsers. For example, the possibility to hide or expand sub-trees may be provided. It is preferred that some or all of the different node types and attributes are indicated in the displayed representation, e.g. by graphical features and/or by color coding. The editing method preferably offers functions for inserting and deleting nodes and defining and changing node types and attributes.

The computer program product and the apparatus of the present invention preferably also comprise the features mentioned above and/or in the dependent data structure and method claims.

Further features, objects and advantages will become apparent from the drawings and the following detailed description of several sample embodiments of the present invention. Reference is made to the schematic drawings, in which:
Fig. 1 shows a block diagram of a system in which an embodiment of the present invention is implemented,
Fig. 2 shows a portion of a graphical representation of the tree-like data structure in a sample embodiment of the invention,
Fig. 3 to Fig. 5 show examples of three nodes in the data structure of Fig. 2,
Fig. 6 shows a flow diagram of a method according to a sample embodiment of the invention, and
Fig. 7 and Fig. 8 show two samples of screen dumps of an editor according to a sample embodiment of the invention.

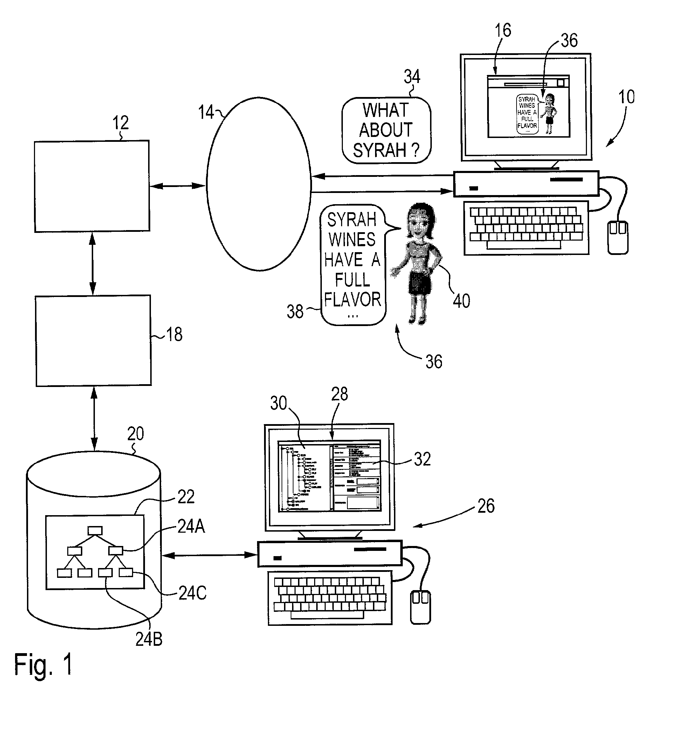

The system depicted in Fig. 1 comprises a user computer 10 that communicates with a server 12 via a communication network 14. In the present example, the communication network 14 is the Internet, the user computer 10 is a standard personal computer (PC) running an Internet browser (e.g., one of the browsers known under the trademarks Netscape Navigator and Microsoft Internet Explorer), and the server 12 is a powerful computer or computer cluster running an appropriate operating system like, e.g., a UNIX®-type operating system and server software like, e.g., Apache® server software. A browser window 16 is shown on the display screen of the user computer 10.

The server 12 cooperates with a character engine 18, which is a software module running on the same computer as the server software or on a different computer connected to the server 12 via a network. The character engine 18 provides the capability of the present invention for simulating human-like behavior. The data items needed in this connection are contained in a storage 20. The storage 20 may be part of the main memory of the computer that executes the character engine 18, or it may be an external file or database system. The storage 20 contains a tree-like data structure 22 according to the present invention. In the schematic representation of Fig. 1, a parent node 24A and two child nodes 24B, 24C are identified by reference numerals. The generic reference 24x will be used to denote any node of the tree-like data structure 22.

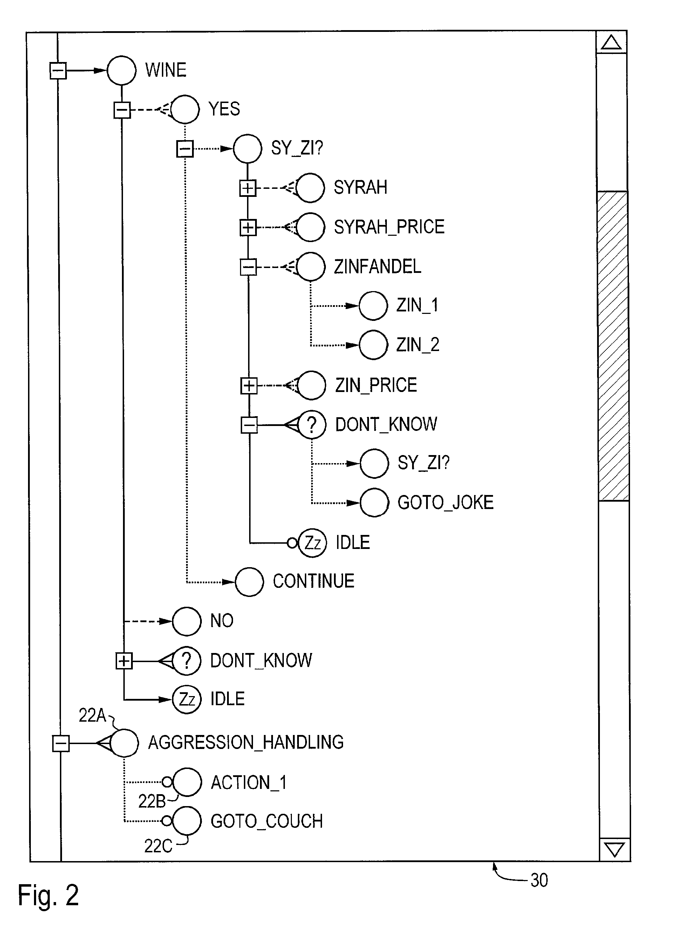

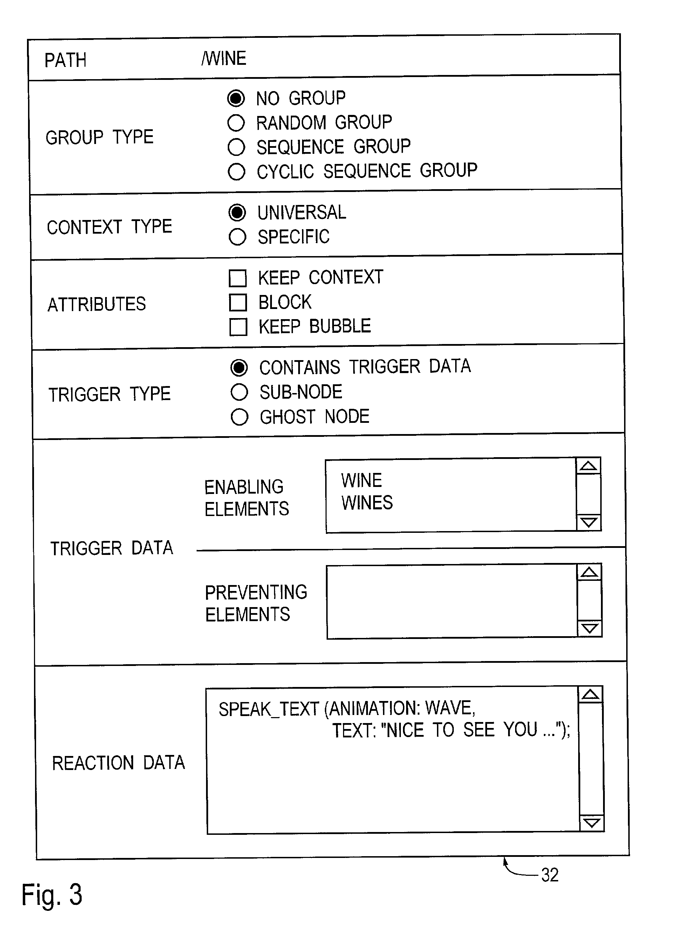

An editing workstation 26 is connected to the storage 20 for creating, viewing and modifying the data structure 22. The data communication between the editing workstation 26 and the storage 20 may run via a local network or even via the communication network 14 for allowing remote configuration of the system. The editing workstation 26 is a workstation-type computer running an editor program according to the present invention. An editor window 28 is depicted on the display screen of the editing workstation 26. The editor window 28 comprises a tree display portion 30 and a node display portion 32. A graphical representation of the data structure 22 (like that of Fig. 2) is shown in the tree display portion 30, while the node display portion 32 depicts details of a selected node 24x (as shown in Fig. 3 to Fig. 5).

In operation of the system of Fig. 1, the user enters a user input 34 by means of the keyboard of the user computer 10. The user input 34 is communicated via the communication network 14 and the server 12 to the character engine 18. The character engine 18 analyzes and processes the user input 34 on the basis of the information contained in the data structure 22 and generates a system reaction 36, which is transmitted back to the user computer 10 and is shown in the browser window 16. In the present example, the system reaction 36 comprises a text bubble 38 and a suitable animation of a virtual character 40.

An important feature of the present system is that the system reaction 36 represents a sensible reply to the user input 34, taking into account the present communication context. This context is a result of the communication items that have been exchanged so far between the user and the system. In the example of Fig. 1, the question "What about Syrah ?" in the user input 34 could only be answered satisfactorily on the basis of the knowledge that the previous communication concerned wines and in particular the typical tastes of different wine varieties (and not, for example, their prices). According to the present system, this communication context is represented by the position of the individual nodes 24x in the tree-like data structure 22.

Fig. 2 depicts an example of the tree display portion 30 that may be shown during the process of creating or updating the data structure 22. The basic layout of this representation is known from directory tree viewing programs like the program known under the trademark Microsoft Windows Explorer. The different tree levels are indicated by various amounts of indentation. Sub-trees may be hidden or expanded. For a hidden sub-tree, only its root note is shown preceded by a "+"- annotation (see, for example, the node "SYRAH" in Fig. 2). An expanded sub-tree is depicted with a "-"-annotation wherein the child nodes are arranged below the parent node and are further indented by one indentation step. An example thereof is the parent node 22A "AGGRESSION_HANDLING" with the child nodes 22B "ACTION_1" and 22C "GOTO_COUCH".

A particular feature of the present sample embodiment is that a variety of important properties of the displayed nodes are represented by various graphical indications. These indications may, e.g., be associated with the representation of the node itself, or with the color or style of the line leading to the node, or with the end mark of this line.

In the present sample embodiment, each node is represented by a circle next to the node name. Normally the circles are empty. However, a question mark is shown in nodes that bear the special, reserved name "DONT_KNOW", and the letters "Zz" are shown in nodes that bear the reserved name "IDLE". The "IDLE" nodes serve as timeout elements in that the "IDLE" node applicable with respect to the present communication context is executed when no user input is received by the system within a predefined time interval. The "DONT_KNOW" nodes are wildcard elements. The "DONT_KNOW" node applicable with respect to the present communication context is triggered in response to a user input for which no other applicable node is found.

The style or color of the line leading to a node denotes the trigger type of the node. A continuous or black line leads to a node that contains trigger data. This may either be an individual node or a group node. A line that is dotted or (in a color representation) blue leads to a sub-node, i.e., a node that is a child of a group node and does not have any trigger data of its own. Examples for sub-nodes are the nodes "SY_ZI?" and the node 22B "ACTION_1" in Fig. 2. A dashed or red line denotes a node having the context type "SPECIFIC" (see, for example, the node "YES" in Fig. 2). The meaning of this context type will be explained later. Finally, a dash-dotted or gray line leads to so-called ghost nodes. A ghost node (e.g., the node "SYRAH_PRICE" in Fig. 2) cannot be triggered in response to any user input, but may only be the target of an jump operation from another node.

Fig. 2 further shows three possible line endings leading to the nodes. A fan-out ending leading to a node (see, e.g., node 22A "AGGRESSION_HANDLING" or node "YES" in Fig. 2) denotes a group node. The other two line endings, namely a "normal" arrowhead and a small circle denote non-group nodes that have their "KEEP CONTEXT" attribute set or not set, respectively. The meaning of this attribute will also be explained later.

A sample communication sequence using the data structure shown in Fig. 2 will now be explained. Reference is made to Fig. 3 to Fig. 5, which depict the node display portion 32 of the editor window 28 for the first three nodes shown in Fig. 2.

The communication sequence starts with an empty context. In the present example, the current context is denoted by the path leading to a so-called context node in the data structure 22. The context node is the node whose children will first be searched in the process of determining a suitable system reaction 36 to a user input 34. In an approximation that is valid in many cases, the context node is the node that has most recently been triggered or executed. The current context node in the present example is the root node of the tree-like data structure 22, and therefore the current context is denoted by the empty path "/".

We now assume that the user enters the following user input 34: "Please inform me about your selection of wines". The processing of this user input 34 leads to execution or triggering of the node "WINE", which is shown in Fig. 3. The trigger data for this node contains the word "wines" as an enabling element and no preventing elements. Since no other child nodes of the present context node match the user input, the node "WINE" is triggered. This yields a system reaction 36 specified by the reaction data of the triggered node. In the present case, the text "Nice to see you..." is output in the text bubble 38, accompanied by an animation "wave" of the virtual character 40.

The steps explained above can be summarized as follows, wherein "CC" denotes the current communication text, "UI" denotes the user input, "TN" denotes the path of the triggered node, and "SR" denotes the text part of the system reaction.
- CC: /
- UI: Please inform me about your selection of wines.
- TN: /WINE
- SR: Nice to see you in our shop. Today we offer a special choice of Californian wines. Are you interested?

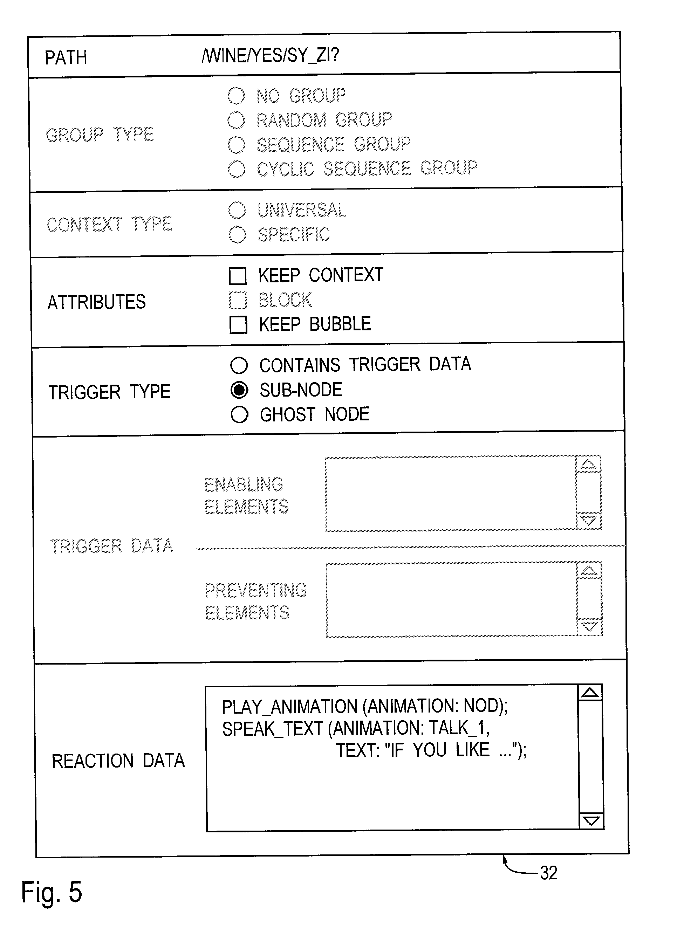

Other possible system reactions 36 that may be specified in the reaction data field include an instruction to perform an animation sequence of the virtual character 40 without any text output (see, for example, the reaction data field of Fig. 5), an instruction to access any internet URI (unique resource identifier) in the browser window 16, and an instruction that causes a jump to a specified node of the tree-like data structure 22, in particular to a ghost node.

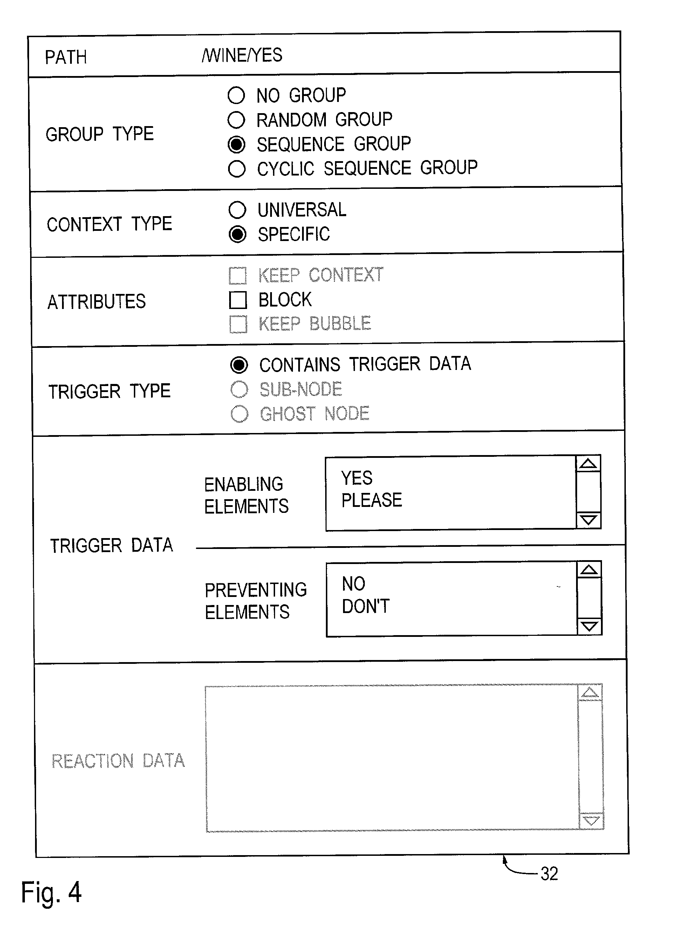

Continuing the example communication sequence, the node "WINE" that has just been executed is now the current context node and the context path consequently reads "/WINE". We assume that the user enters the words "Yes, of course!" as the user input 34. This leads to triggering of the node "YES" (full path: "/WINE/YES") and its sub-node "SY_ZI?". These nodes are shown in Fig. 4 and Fig. 5, respectively.

The nodes "YES" and "SY_ZI?" are a group node and one of its sub-nodes. In contrast to a "normal" node like the node "WINE", a group node does not contain any reaction data, and its sub-nodes do not contain any trigger data. Node structures that comprise a group node and a plurality of sub-nodes can be used for defining a group of alternative reaction patterns from which one is chosen when a user input 34 matching the trigger data of the group node is entered in one and the same context.

The way in which the selection of one of the sub-nodes of a group node is made depends on the group type that is specified in the group node. The group type "RANDOM GROUP" signifies that a random choice among the sub-nodes is made. The group type "CYCLIC SEQUENCE GROUP" denotes that the sub-nodes of the group are to be executed in a sequential and cyclic fashion, whereas the group type "SEQUENCE GROUP" denotes that the sub-nodes are executed sequentially, repeating the last sub-node if further sub-nodes are available.

As mentioned above, the group node "YES" is triggered in response to the user input 34 "Yes, of course". This is because the user input 34 contains the word "yes" (corresponding to an enabling element of the trigger data of the node "YES") and does not contain any word that is listed as a preventing element in the trigger data of the node "YES". In this respect, the occurrence of a single preventing element in a user input 34 absolutely prevents triggering of the corresponding node, while the occurrence of an enabling element only enables triggering and still permits that the system may choose to execute another node that also qualifies.

Since the triggered group node "WINE" has the group type "SEQUENCE GROUP", the first sub-node "SY_ZI?" is executed automatically. No further triggering conditions need to be fulfilled. The system reactions are specified by the reaction data of the sub-node "SY_ZI?", namely an nodding animation of the virtual character 40 and a text output "If you like ...".

The above steps of triggering the group node "YES" and the sub-node "SY_ZI?" can be summarized as follows:
- CC: /WINE
- UI: Yes, of course!
- TN: /WINE/YES (and sub-node SY_ZI?)
- SR: If you like Californian wines, be sure to try Syrah and Zinfandel.

The next operations of the system correspond to execution of the group node "ZINFANDEL" and the sub-node "ZIN_1". These steps correspond to the ones that have been described above. They can be summarized as follows:
- CC: /WINE/YES/SY_ZI?
- UI: Tell me more about the Zinfandel.
- TN: /WINE/YES/SY_ZI?/ZINFANDEL (and sub-node ZIN_1)
- SR: Oh, the Zinfandel's fabulous deep blackberry flavor will be an unforgettable experience.

The current context path is now "/WINE/YES/SY_ZI?/ZINFANDEL/ZIN_1". We assume that the user, annoyed by the ornate description of the taste of Zinfandel wine enters the following user input 34: "You are a fool!". This user input 34 does not match the trigger data of any of the nodes within the current communication context since the current context node "ZIN_1" has no child nodes. The search therefore continues in "higher" or more general context levels corresponding to context nodes that are closer to the root of the tree-like data structure 22. The context node is first set from "ZIN_1" to "SY_ZI?", then to "WINE" and finally to the root node. An applicable group node "AGGRESSION_HANDLING" is finally found for the root node context (empty context), and execution of this node and of its first sub-node "ACTION_1" yields a system reaction 36 having the text part "Behave yourself!". These steps are summarized below:
- CC: /WINE/YES/SY_ZI?/ZINFANDEL/ZIN_1
- UI: You are a fool!
- TN: /AGGRESSION_HANDLING (and sub-node ACTION_1)
- SR: Behave yourself!

It is an important property of the present sample embodiment that a step of backtracking or context generalization is performed when no suitable node was found within the present communication context. Only nodes that have the context type "UNIVERSAL" are considered during this backtracking. Nodes with the context type "SPECIFIC" can only be triggered if they are found within the original communication context, i.e., as child nodes of the original context node. For example, if the user entered "Yes, of course" in the above context (context node "ZIN_1"), the node "YES" shown in Fig. 4 would not be found since the context type "SPECIFIC" has been set for this node. On the other hand, if the user entered the keyword "wine" within the above context (context node "ZIN_1"), the node "WINE" shown in Fig. 3 might trigger because of its "UNIVERSAL" context type.

It should further be noted that the node "ACTION_1" is depicted in Fig. 2 with a small circle line ending, which means that the "KEEP CONTEXT" attribute of this node is set. The effect of this attribute is that triggering of the sub-node "ACTION_1" (and of the corresponding group node AGGRESSION_HANDLING) will not change the communication context. In the present example, the current context node is still the node "ZIN_1" with the full context path "/WINE/YES/SY_ZI?/ZINFANDEL/ZIN_1". The "KEEP CONTEXT" attribute can thus be used to handle general user inputs 34 that have no relation to the present context and that do normally not start a new subject of the communication.

Continuing the sample execution sequence, the user now apologizes with the user input 34 "Sorry". This user input 34 is not found within the present context (context node "ZIN_1") such that the backtracking process described above ensues. Further assuming that no applicable node was found during the backtracking process, a new search is started for an applicable wildcard or "DONT_KNOW" node. This new search again begins with the original context (context node "ZIN_1") and then backtracks to the context node "SY_ZI?" where a "DONT_KNOW" node having the full path "/WINE/YES/SY_ZI?/DONT_KNOW" is found. Since this "DONT_KNOW" node is a group node, its first applicable sub-node "SY_ZI?" will be executed, yielding a system reaction 36 that is an attempt to establish a common basis for the further communication. These final actions of the sample communication sequence can be summarized as follows:
- CC: /WINE/YES/SY_ZI?/ZINFANDEL/ZIN_1
- UI: Sorry.
- TN: /WINE/YES/SY_ZI?/DONT_KNOW/SY_ZI?
- SR: Now, did you say "Syrah" or "Zinfandel"?

Further attributes of a node in the present sample embodiment are the attributes "BLOCK" and "KEEP BUBBLE". A node that has a set "BLOCK" attribute stops the backtracking process from reaching a more generalized context when that node is encountered. In other words, the "BLOCK" node acts like a root node with respect to backtracking. The "KEEP BUBBLE" attribute is of less importance. It signifies that the text bubble 38 shall continue to be displayed on the browser window 16.

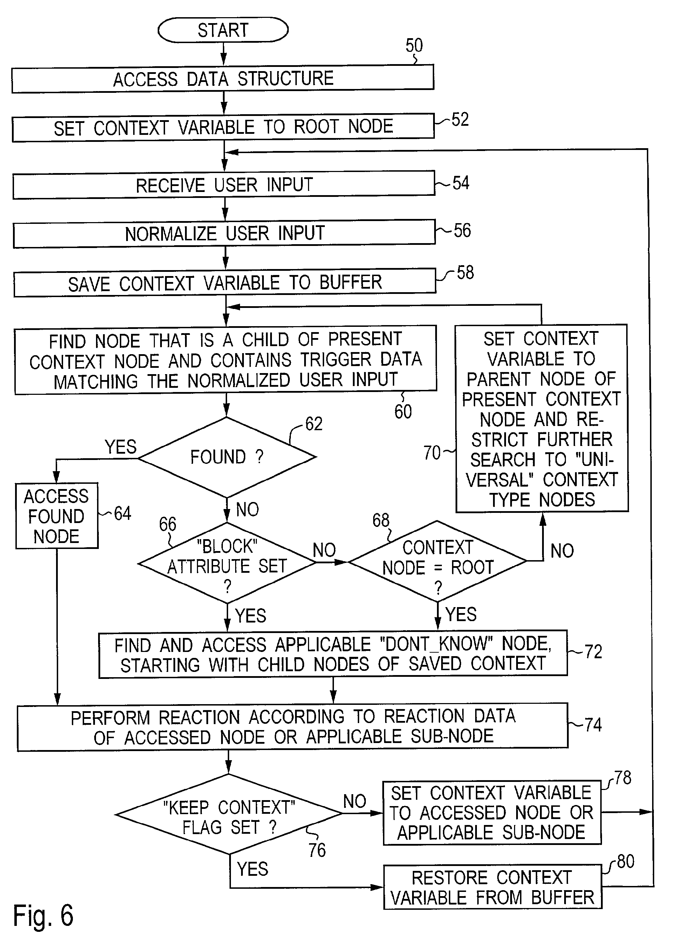

A sample implementation of the method for providing semi-intelligent communication reactions, which has been explained above by way of example, will now be described with reference to the flow diagram of Fig. 6.

The method starts in step 50 with an operation of accessing the data structure 22. This may include the step of loading the data structure 22 from an external mass memory into the working memory space of the character engine 18. A context variable is then set to the root node of the data structure 22 in step 52. The context variable may be implemented as a pointer to the individual nodes or as a string containing the path of the context node or in a variety of other ways.

Next a user input 34 is received in step 54. A further step 56 of normalizing the user input is performed in the present sample embodiment. The normalizing step 54 comprises a sub-step in which synonymous words are identified and a sub-step in which irrelevant words are deleted. For example, words like "yes", "of course", "certainly" and so on may all be mapped to "yes", and words like "the", "a", "an" and so on may be discarded.

The current context variable is now saved in a buffer memory in step 58, and the search for a node applicable with respect to the normalized user input is commenced in step 60. If a node that contains appropriate trigger data and is a child of the present context node (in the present situation, the original context node) is found ("yes" branch of test 62), the found node is accessed in step 64 and the search process ends.

If no appropriate node is found ("no" branch of test 62), further tests are made if the "BLOCK" attribute is set (test 66) and if the present context node is already the root of the data structure 22 (test 68). If neither of these conditions is fulfilled, the search is extended in a backtracking process. For performing the backtracking process, the context variable is set to the parent of the present context node in step 70, and the search process of step 60 is repeated for this generalized context. However, after the first backtracking step subsequent search operations in step 60 are restricted to nodes having the context type "UNIVERSAL". A suitable flag denoting this restriction of the search process is set in step 70.

The search ends successfully when a suitable node is found ("yes" branch of test 62, step 64). Otherwise, the search continues with repeated backtracking operations until either a node with a set "BLOCK" attribute is encountered ("yes" branch of test 66) or the root node has been reached ("yes" branch of test 68). If either of these conditions apply, an applicable "DONT_KNOW" node is searched in step 72. This second search starts again with the original context, which has been saved in step 58, and continues with repeated backtracking steps until a "DONT_KNOW" node is found. The found node is accessed in step 72.

In step 74, the system reaction according to the reaction data of the accessed node (or the reaction data of the applicable sub-node, if the accessed node is a group node) is output. It is then tested whether the "KEEP CONTEXT" flag of the accessed node or the applicable sub-node is set (test 76). If this is not the case ("no" branch of test 76), the context variable is updated by setting it to the accessed node or to the applicable sub-node in step 78. Otherwise, step 80 is performed for restoring the original context variable from the buffer memory to which it has been saved in step 58. Operation continues in both cases with the receipt of a further user input in step 54.

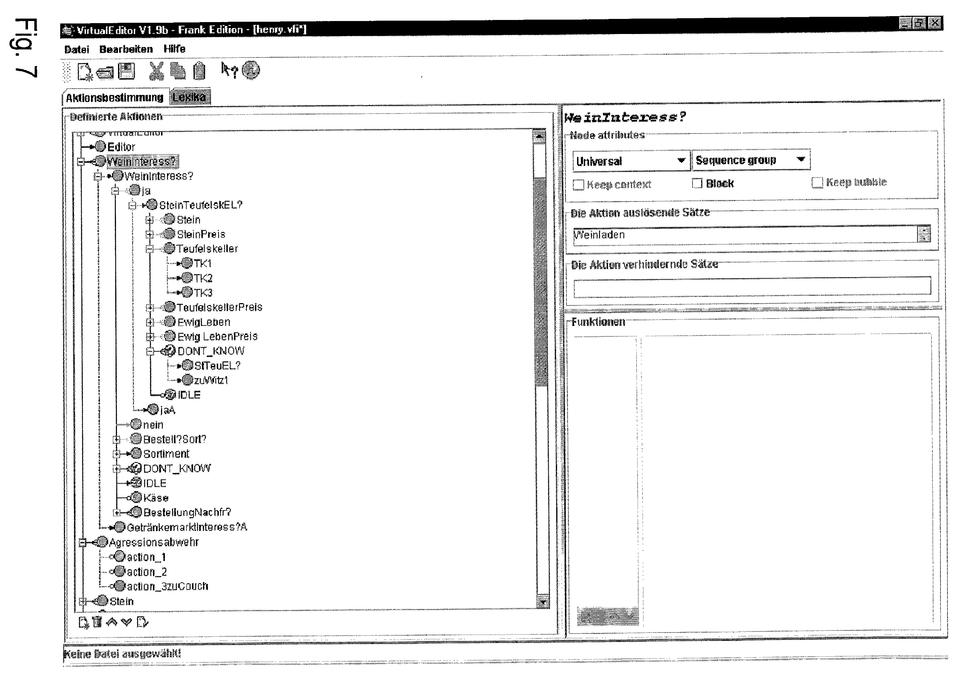

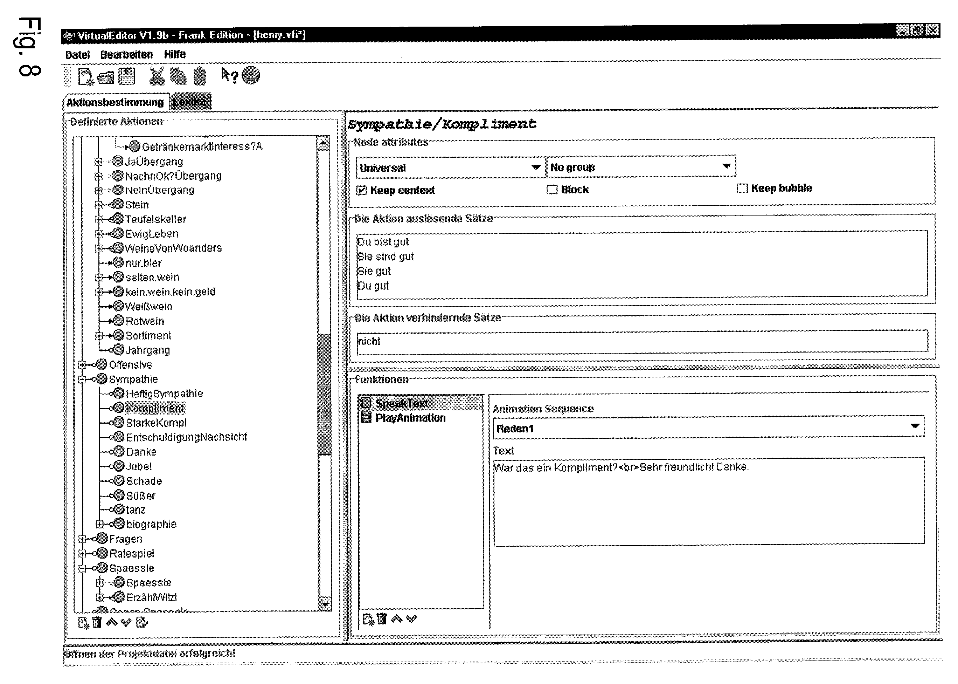

Fig. 7 and Fig. 8 represent screen shots of the editor window 28 in a prototype implementation of the present invention. These screen shots are presented in order to provide a further illustration of a sample embodiment of the present invention. The actual text portions of the screen shots are partially in the German language. They mirror the information that has been given above in Fig. 2 to Fig. 5 and the corresponding parts of the description such that the German language portions are not relevant for understanding the principles and ideas of the present invention and of the present sample embodiments.

It is thus apparent that the invention can be used in an automatic system for simulating intelligent communication reactions in a way that is powerful and simplifies the development process. The particulars contained in the above description of sample embodiments should not be construed as limitations of the scope of the invention, but rather as exemplifications of preferred embodiments thereof. Many other variations are possible and will be readily apparent to persons skilled in the art. The scope of the invention should accordingly be determined not by the embodiments illustrated, but by the appended claims and their legal equivalents.

## Claims

1. A tree-like data structure (22) adapted for use by an automatic system for simulating intelligent communication reactions (36) of said system in response to user inputs (34),
- said tree-like data structure (22) comprising a plurality of nodes (24x),
- at least one of said nodes (24x) being associated with trigger data that specifies at least one user input (34) that may lead to triggering the node (24x),
- at least one of said nodes (24x) being associated with reaction data that specifies at least one system reaction (36),
- wherein the arrangement of said nodes (24x) in said tree-like data structure (22) reflects the different communication contexts for which said nodes (24x) are intended, the communication context of a child node (24B, 24C) being a specialization of the communication context of its parent node (24A).

2. The data structure (22) of claim 1,
wherein the communication context of a child node (24B, 24C) is derivable from the communication context of its parent node (22A) by a user input (34) matching the trigger data associated with said child node (24B, 24C) and/or by a system (36) reaction according to the reaction data associated with said parent node (24A).

3. The data structure (22) of claim 1 or claim 2,
wherein two nodes (24B, 24C) that have the same parent node (24A) are alternatives intended for use in the same communication context.

4. The data structure (22) of one of claims 1 to 3,
comprising at least one node structure formed by a group node and a plurality of sub-nodes, said sub-nodes being child nodes (24B, 24C) of said group node,
wherein said group node is free of reaction data and said sub-nodes are free of trigger data.

5. The data structure (22) of one of claims 1 to 4,
comprising at least one node (24x) containing an attribute to indicate whether or not the previous communication context is to remain unchanged when executing the node (24x).

6. The data structure (22) of one of claims 1 to 5,
comprising at least one node (24x) that is intended for execution when no user input (34) is received within a predefined time interval, and/or comprising at least one node (24x) that is intended for execution in response to a user input (34) for which no matching trigger data is found.

7. A method for simulating intelligent communication reactions of an automatic system in response to user inputs (34), said method comprising the steps of:
a) accessing (50) a tree-like data structure (22) according to one of claims 1 to 6,
b) initializing (52) a variable denoting the present communication context,
c) receiving (54) a user input (34),
d) finding (60) a node (24x) that fulfils at least the condition that the node (24x) is associated with trigger data matching the user input (34),
e) if the node (24x) found in step d) is associated with reaction data, performing (74) at least one system reaction (36) defined by the reaction data, and
f) if applicable (76), updating (78) the communication context variable to reflect the new communication context.

8. The method of claim 7,
wherein step d) comprises the steps of searching for a suitable node (24x) within the present communication context and, if this search fails, successively searching within less specialized contexts.

9. The method of claim 7 or claim 8,
wherein the tree-like data structure (22) comprises the features of claim 4, and wherein, if the node (24x) found in step d) is a group node, a sub-node of this group node is selected and at least one system reaction (36) defined in the reaction data of the selected sub-node is performed.

10. The method of one of claims 7 to 9,
wherein, in response to an attribute of the node (24x) found in step d), no updating of the context variable is performed (80) if the attribute is set (76).

11. A method for displaying a data structure, said data structure being adapted for use by an automatic system for simulating intelligent communication reactions of said system in response to user inputs, wherein said data structure is displayed in a tree-like representation that shows a data structure (22) according to one of claims 1 to 6.

12. The method of claim 11,
wherein said tree-like representation showing said data structure (22) contains graphical indications of different node types and different node attributes.

13. A method for editing a data structure displayed in a method according to claim 11 or claim 12, providing at least one of the functions of:
- inserting a new node (24x),
- deleting an existing node (24x),
- defining the type of a node (24x),
- changing the type of a node (24x),
- defining an attribute of a node (24x), and
- changing an attribute of a node (24x).

14. A computer program product for execution by at least one general purpose computer, said computer program product including instructions for making said at least one general purpose computer perform the steps of the method of one of claims 7 to 13.

15. An apparatus comprising at least one general purpose computer programmed for performing the steps of the method of one of claims 7 to 13.
